# EUROPÄISCHE PATENTSCHRIFT

(11) **EP 2 149 926 B1**
(45) Veröffentlichungstag und Bekanntmachung des Hinweises auf die Patenterteilung: **28.03.2018**
(21) Anmeldenummer: 09164456.7
(22) Anmeldetag: 02.07.2009
(51) Int. Cl.: H01M 2/10, H01M 10/613, H01M 10/617, H01M 10/653, H01M 10/6554, H01M 10/6555, H01M 10/651

(54) **Akkumulator**
Accumulator
Accumulateur

(30) Priorität: 29.07.2008 DE 102008040811
(43) Veröffentlichungstag der Anmeldung: 03.02.2010
(73) Patentinhaber: ROBERT BOSCH GMBH, 70442 Stuttgart (DE)
(72) Erfinder: Doege, Volker, 89561, Dischingen (DE); Leuthner, Stephan, 71229, Leonberg (DE); Koenigsmann, Martin Holger, 70193, Stuttgart (DE)

(56) Entgegenhaltungen:
- JP-A- 2004 047 208
- JP-A- 2004 355 861
- JP-A- 2005 317 455
- JP-A- 2006 196 230

## Beschreibung

### Stand der Technik

Die vorliegende Erfindung betrifft einen Akkumulator mit einer Mehrzahl von Akkumulatorzellen, die voneinander beabstandet in einem Akkumulatorgehäuse angeordnet sind, das zumindest teilweise mit einem die Akkumulatorzellen ummantelnden Füllmaterial gefüllt ist.

Derartige Akkumulatoren bestehen aus einzelnen, zu Packs oder Modulen zusammen geschalteten Akkumulatorzellen und werden deshalb häufig auch als Akkupacks oder Akku-Module bezeichnet. In diesen Akkumulatoren bzw. Akkupacks oder Akku-Modulen sind die einzelnen Akkumulatorzellen meist in einer symmetrischen Anordnung in einem in der Regel mit Kunststoff gefüllten Akkumulatorgehäuse angeordnet. Der Kunststoff ummantelt die Akkumulatorzellen, die aufgrund einer Erhitzung im Lade- und Entladebetrieb durch die hierbei fließenden Ströme Wärme erzeugen, die die Funktionsfähigkeit der Akkumulatoren beeinträchtigen kann. Diese Wärme wird über die Kunststoff-Ummantelungen aus dem Inneren des Akkumulators an die Umgebung abgeleitet, um eine zu starke Erhitzung der Akkumulatorzellen und somit des Akkumulators zu verhindern.

Nachteilig am Stand der Technik ist, dass die um den Mittelpunkt des Akkumulatorgehäuses herum angeordneten Akkumulatorzellen, bzw. Akkumulatorzellen mit einer größeren Anzahl benachbarter Zellen, sich aufgrund einer schlechteren Wärmeableitung meist stärker erhitzen, als die Zellen am Rand des Gehäuses bzw. als Zellen mit weniger benachbarten Zellen. Hieraus ergibt sich eine inhomogene Temperaturverteilung im Akkumulatorgehäuse, wobei die stärker erhitzten Akkumulatorzellen stärker bzw. schneller altern als die weniger erhitzten Zellen. Dies führt mit zunehmender Anzahl von Lade- und Entladezyklen zu einer frühzeitigen Alterung der stärker erhitzten Akkumulatorzellen bis zu einem Zeitpunkt, an dem durch einen Defekt einer dieser Zellen der Akkumulator vorzeitig unbrauchbar wird und somit die Lebensdauer des Akkumulators verkürzt wird. Darüber hinaus heizen sich die einzelnen Akkumulatorzellen im Lade- und Entladebetrieb auch gegenseitig auf. Dies kann insbesondere bei Akkumulatorzellen mit einer vergleichsweise großen Anzahl von unmittelbar benachbarten Akkumulatorzellen zu einer lokalen Überhitzung des Akkumulators führen, die die Sicherheit bei dessen Benutzung beeinträchtigen kann.

Die Druckschrift JP 2004 355 861 A offenbart insbesondere in Figur 2 einen Akkumulator mit einer Mehrzahl von Akkumulatorzellen in Form von "sodium secondary batteries" (10, 20), welche voneinander beabstandet in einem Akkumulatorgehäuse in Form eines "incubation container" (30) mit einer Gehäusewand in Form eines "package body" (31) angeordnet sind. Das Akkumulatorgehäuse ist dabei zumindest teilweise mit einem die Akkumulatorzellen ummantelnden Füllmaterial in Form eines "insulating material" (40) gefüllt. Eine erste Akkumulatorzelle weist eine erste Ummantelung und eine zweite Akkumulatorzelle eine zweite Ummantelung auf, wobei die erste Ummantelung und die zweite Ummantelung zumindest abschnittsweise unterschiedliche Wandstärken aufweisen. Dabei weist die erste Akkumulatorzelle mehr unmittelbar benachbarte Akkumulatorzellen auf als die zweite Akkumulatorzelle und die erste Akkumulatorzelle sowie die zweite Akkumulatorzelle sind jeweils benachbart zu der Gehäusewand angeordnet.

### Offenbarung der Erfindung

Eine Aufgabe der Erfindung ist es daher, einen neuen Akkumulator, bzw. Akkupack oder Akku-Modul, mit verbessertem Thermomanagement bereit zu stellen, bei dem eine Verlängerung der Lebensdauer und eine Verbesserung der Sicherheit im Betrieb ermöglicht wird.

Dieses Problem wird gelöst durch einen Akkumulator mit einer Mehrzahl von Akkumulatorzellen, die voneinander beabstandet in einem Akkumulatorgehäuse mit einer Gehäuseaußenwand angeordnet sind,das zumindest teilweise mit einem die Akkumulatorzellen ummantelnden Füllmaterial gefüllt ist,wobei eine erste Akkumulatorzelle eine erste Ummantelung und eine zweite Akkumulatorzelle eine zweite Ummantelung aufweist, wobei die erste Ummantelung und die zweite Ummantelung zumindest abschnittsweise unterschiedliche Wandstärken aufweisen, wobei die erste Akkumulatorzelle mehr unmittelbar benachbarte Akkumulatorzellen aufweist, als die zweite Akkumulatorzelle und die erste Akkumulatorzelle sowie die zweite Akkumulatorzelle jeweils benachbart zu der Gehäuseaußenwand angeordnet sind, dadurch gekennzeichnet, dass die erste Ummantelung zur Gehäuseaußenwand hin eine geringere Wandstärke aufweist als die zweite Ummantelung. Dies ermöglicht somit, ein Aufheizen von ausgewählten Akkumulatorzellen im Betrieb des Akkumulators durch unmittelbar benachbarte Akkumulatorzellen durch eine Vergrößerung der Wandstärke zu diesen Nachbarzellen zu reduzieren und die Wärmeableitung von diesen Zellen verbessern.

Gemäß der Erfindung sind die erste und zweite Ummantelung dazu ausgebildet, im Betrieb des Akkumulators eine im Wesentlichen homogene Temperaturverteilung im Inneren des Akkumulatorgehäuses zu bewirken. Somit kann im Betrieb des Akkumulators ein verbessertes Thermomanagement erzielt werden, sodass die Lebensdauer des Akkumulators verlängert und die Gebrauchssicherheit vergrößert werden.

Gemäß einer Ausführungsform, bei der die erste Akkumulatorzelle mehr unmittelbar benachbarte Akkumulatorzellen hat, als die zweite Akkumulatorzelle, weist die erste Ummantelung im Bereich zwischen der ersten Akkumulatorzelle und zumindest einem Teil ihrer unmittelbar benachbarten Akkumulatorzellen eine größere Wandstärke auf, als die zweite Ummantelung im Bereich zwischen der zweiten Akkumulatorzelle und ihren unmittelbar benachbarten Akkumulatorzellen.

Somit können Akkumulatorzellen, die vergleichsweise viele unmittelbar benachbarte Akkumulatorzellen haben, mit einem größeren Abstand von ihren unmittelbar benachbarten Akkumulatorzellen beabstandet werden, als Akkumulatorzellen mit vergleichsweise wenigen unmittelbar benachbarten Akkumulatorzellen, sodass eine homogenere Temperaturverteilung im Akkumulator erzielt werden kann.

Falls bei dieser Ausführungsform das Akkumulatorgehäuse eine Gehäuseaußenwand aufweist und die zweite Akkumulatorzelle im Bereich der Gehäuseaußenwand angeordnet ist, weist die zweite Ummantelung im Bereich zwischen der zweiten Akkumulatorzelle und der Gehäuseaußenwand eine wulstartige Erweiterung auf.

Somit kann eine zu starke Abkühlung der zweiten Akkumulatorzelle im Betrieb des Akkumulators verhindert werden.

Falls die erste Akkumulatorzelle ebenfalls im Bereich der Gehäuseaußenwand angeordnet ist, weist die erste Ummantelung im Bereich zwischen der ersten Akkumulatorzelle und der Gehäuseaußenwand eine geringere Wandstärke auf, als die wulstartige Erweiterung.

Die von der ersten Akkumulatorzelle erzeugte Wärme kann somit über die Gehäuseaußenwand schneller an die Umgebung abgeleitet werden, als die von der zweiten Akkumulatorzelle erzeugte Wärme.

Gemäß einer Ausführungsform, bei der das Akkumulatorgehäuse eine Gehäuseaußenwand aufweist und die erste und zweite Akkumulatorzelle im Bereich der Gehäuseaußenwand angeordnet sind, wobei die erste Akkumulatorzelle mehr unmittelbar benachbarte Akkumulatorzellen aufweist, als die zweite Akkumulatorzelle, weist die zweite Ummantelung im Bereich zwischen der zweiten Akkumulatorzelle und der Gehäuseaußenwand eine wulstartige Erweiterung auf, und die erste Ummantelung weist im Bereich zwischen der ersten Akkumulatorzelle und der Gehäuseaußenwand eine geringere Wandstärke auf, als die wulstartige Erweiterung.

Die Erfindung ermöglicht somit auch bei einem Akkumulator, bei dem die Akkumulatorzellen im Wesentlichen identische Abstände zu benachbarten Akkumulatorzellen aufweisen, ein verbessertes Thermomanagement, bei dem die von den Akkumulatorzellen mit vergleichsweise vielen unmittelbar benachbarten Akkumulatorzellen erzeugte Wärme über die Gehäuseaußenwand schneller an die Umgebung abgeleitet werden kann, als die von den Akkumulatorzellen mit vergleichsweise wenigen unmittelbar benachbarten Akkumulatorzellen erzeugte Wärme. Somit kann auch bei diesem Akkumulator eine homogenere Temperaturverteilung erzielt werden.

Als Füllmaterial wird bevorzugt Kunststoff verwendet.

Das Eingangs genannte Problem wird auch gelöst durch eine Elektrowerkzeugmaschine mit einem Akkumulator, der eine Mehrzahl von Akkumulatorzellen aufweist, die voneinander beabstandet in einem Akkumulatorgehäuse angeordnet sind, das zumindest teilweise mit einem die Akkumulatorzellen ummantelnden Füllmaterial gefüllt ist. Eine erste Akkumulatorzelle weist eine erste Ummantelung auf und eine zweite Akkumulatorzelle eine zweite Ummantelung. Die erste Ummantelung und die zweite Ummantelung weisen zumindest abschnittsweise unterschiedliche Wandstärken auf.

### Kurze Beschreibung der Zeichnungen

Die Erfindung ist anhand eines in den Zeichnungen dargestellten Ausführungsbeispiels in der nachfolgenden Beschreibung näher erläutert. Es zeigen:
- Fig. 1: eine erste Ausführungsform eines Akkumulators gemäß dem Stand der Technik.
- Fig. 2: eine zweite Ausführungsform eines Akkumulators gemäß der Erfindung,
- Fig. 3: eine dritte Ausführungsform eines Akkumulators gemäß der Erfindung, und
- Fig. 4: eine vierte, nicht erfindungsgemäße, Ausführungsform eines Akkumulators.

### Beschreibung der Ausführungsbeispiele

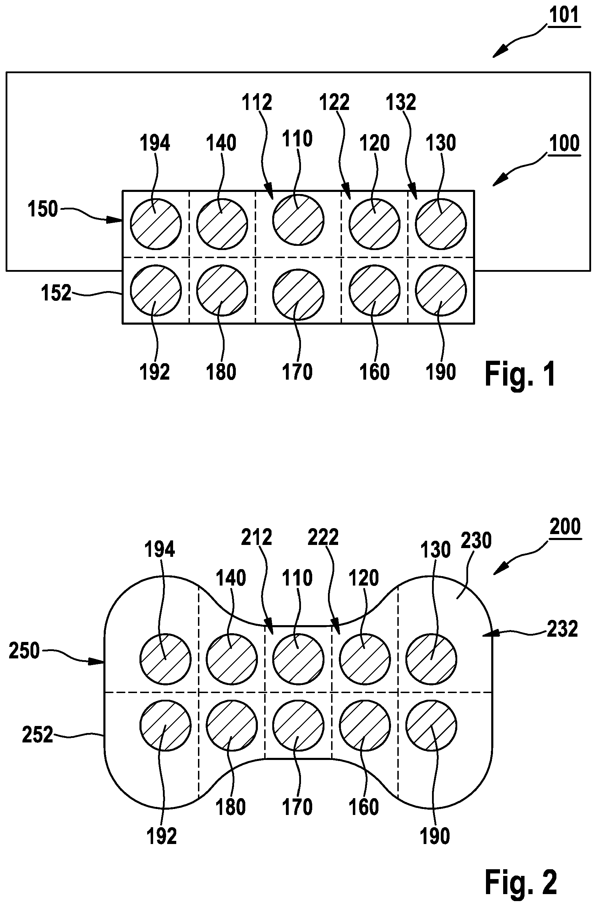

Fig. 1 zeigt einen vorzugsweise zur Stromversorgung einer schematisch dargestellten Elektrowerkzeugmaschine 101 geeigneten Akkumulator 100 mit einer Mehrzahl von Akkumulatorzellen 110, 120, 130, 140, 160, 170, 180, 190, 192, 194, die in einem Akkumulatorgehäuse 150 angeordnet und zu einem Pack oder Modul zusammen geschaltet sind. Die Akkumulatorzellen 110, 120, 130, 140, 160, 170, 180, 190, 192, 194 können von einem beliebigen Akkumulatortyp sein, wie z.B. NiCd, NiMh und Li-Ion.

Es wird jedoch darauf hingewiesen, dass die Verwendung des Akkumulators 100 zur Stromversorgung der Elektrowerkzeugmaschine 101 lediglich beispielhaft beschrieben ist, die Verwendung des Akkumulators 100 jedoch nicht hierauf beschränkt ist. Vielmehr kann der Akkumulator 100 in vielen unterschiedlichen Vorrichtungen Anwendung finden, z.B. in einem stationären Energiespeicher oder einem Energiespeicher in Fahrzeugen. Derartige und weitere Modifikationen und Variationen sind im Rahmen der vorliegenden Erfindung möglich.

Das Akkumulatorgehäuse 150 hat eine Gehäuseaußenwand 152 und ist in seinem Inneren mindestens teilweise mit einem Füllmaterial gefüllt, z.B. mit Kunststoff. Dieses Füllmaterial ummantelt die Akkumulatorzellen 110, 120, 130, 140, 160, 170, 180, 190, 192, 194 zumindest abschnittsweise, bevorzugt vollständig mit Ausnahme der Stirnflächen. Beispielsweise hat die Akkumulatorzelle 110 eine gestrichelt dargestellte Ummantelung 112, die Akkumulatorzelle 120 eine gestrichelt dargestellte Ummantelung 122 und die Akkumulatorzelle 130 eine gestrichelt dargestellte Ummantelung 132.

Es wird darauf hingewiesen, dass bei gebräuchlichen Herstellungsverfahren von Akkumulatoren, bei denen Akkumulatorzellen in einem Akkumulatorgehäuse von Kunststoff umgeben sind, die Gehäuse in der Regel durch Kunststoffspritzen mit dem Kunststoff gefüllt bzw. ausgegossen werden. Somit ist nicht jede Akkumulatorzelle separat von einer Kunststoff-Ummantelung umschlossen, sondern vielmehr sind alle Akkumulatorzellen in einen einstückigen Kunststoffblock eingebettet. Deshalb umfasst der Begriff "Ummantelung" im Kontext der vorliegenden Erfindung nicht nur eine an einer Akkumulatorzelle unmittelbar vorgesehene bzw. angebrachte Hülle, sondern auch einen Abschnitt eines derartigen einstückigen Kunststoffblocks bzw. des Füllmaterials, das eine Akkumulatorzelle unmittelbar umgibt und dieser somit zugeordnet wird bzw. visuell zugeordnet werden kann, sowie Trennwände zwischen Akkumulatorzellen im weitesten Sinne.

Gemäß einer Ausführungsform haben wenigstens zwei der Ummantelungen der Akkumulatorzellen 110, 120, 130, 140, 160, 170, 180, 190, 192, 194 zumindest abschnittsweise unterschiedliche Wandstärken. Wie aus Fig. 1 ersichtlich, haben z.B. die Ummantelungen 112 und 132 verschiedene Wandstärken. Diese unterschiedlichen Wandstärken sind bevorzugt derart vorgegeben, dass im Betrieb des Akkumulators 100 eine im Wesentlichen homogene Temperaturverteilung im Inneren des Akkumulatorgehäuses 150 erzielt wird.

In Fig. 1 sind alle Akkumulatorzellen 110, 120, 130, 140, 160, 170, 180, 190, 192, 194 im Bereich der Gehäuseaußenwand 152 angeordnet und im Gehäuseinneren von unmittelbar benachbarten Akkumulatorzellen umgeben. Z.B. hat die Akkumulatorzelle 110 fünf unmittelbar benachbarte Akkumulatorzellen, und zwar die Zellen 120, 140, 160, 170 und 180. Die Akkumulatorzelle 130 hat dahingegen nur drei unmittelbar benachbarte Akkumulatorzellen, und zwar die Zellen 120, 160 und 190.

Da Akkumulatorzellen auch von benachbarten Akkumulatorzellen aufgeheizt werden, ist davon auszugehen, dass z.B. die Akkumulatorzelle 110 sich im Betrieb des Akkumulators 100 stärker erhitzt als die Akkumulatorzelle 130, die zwei Nachbarzellen weniger hat. Deshalb weist die Ummantelung 112 zumindest im Bereich zwischen der Akkumulatorzelle 110 und deren unmittelbar benachbarten Akkumulatorzellen 120, 140, 160, 170, 180 eine größere Wandstärke auf, als die Ummantelung 132 im Bereich zwischen der Akkumulatorzelle 130 und deren unmittelbar benachbarten Akkumulatorzellen 120, 160, 190. Diese größere Wandstärke reduziert ein Aufheizen der Akkumulatorzelle 110 durch die Nachbarzellen 120, 140, 160, 170, 180. Somit wird die im Betrieb des Akkumulators 100 maximal mögliche Temperatur der Akkumulatorzelle 110 reduziert, wodurch eine zu schnelle Alterung der Zelle 110 verhindert und eine lokale Überhitzung vermieden werden kann.

Wie aus Fig. 1 ersichtlich, haben bei dem Akkumulator 100 alle Akkumulatorzellen 110, 120, 130, 140, 160, 170, 180, 190, 192, 194 beispielhaft identische Abstände zur Gehäuseaußenwand 152, bzw. deren Ummantelungen haben im Wesentlichen übereinstimmende Wandstärken im Randbereich des Akkumulatorgehäuses 150. Obwohl eine zu starke Erwärmung insbesondere der inneren Akkumulatorenzellen 110, 170 durch die oben beschriebenen Maßnahmen vermieden wird, kühlen die äußeren Akkumulatorenzellen 130, 190, 192, 194 schneller ab, da sie weniger unmittelbar benachbarte Zellen und eine größere, der Gehäuseaußenwand 152 zugewandte Mantelfläche aufweisen.

Fig. 2 zeigt einen vorzugsweise zur Stromversorgung einer Elektrowerkzeugmaschine, z.B. der Elektrowerkzeugmaschine 101 von Fig. 1, geeigneten Akkumulator 200 gemäß einer weiteren Ausführungsform, der eine Abwandlung des Akkumulators 100 von Fig. 1 repräsentiert. Bei dem Akkumulator 200 sind die Akkumulatorzellen 110, 120, 130, 140, 160, 170, 180, 190, 192, 194 in einem Akkumulatorgehäuse 250 mit einer Gehäuseaußenwand 252 angeordnet. Das Akkumulatorgehäuse 250 ist wie das Akkumulatorgehäuse 150 von Fig. 1 in seinem Inneren bevorzugt mit Kunststoff ausgegossen, sodass z.B. die Akkumulatorzelle 110 eine gestrichelt dargestellte Ummantelung 212, die Akkumulatorzelle 120 eine gestrichelt dargestellte Ummantelung 222 und die Akkumulatorzelle 130 eine gestrichelt dargestellte Ummantelung 232 aufweist. Diese Ummantelungen können wie bei Fig. 1 beschrieben ausgebildet sein, oder alternativ hierzu zumindest in den Bereichen zwischen den Akkumulatorzellen 110, 120, 130, 140, 160, 170, 180, 190, 192, 194 annähernd übereinstimmende Wandstärken aufweisen.

In der in Fig. 2 gezeigten Ausführungsform hat die Ummantelung 232 der im Bereich der Gehäuseaußenwand 252 angeordneten Akkumulatorzelle 130 eine wulstartige Erweiterung 230, die bevorzugt im Bereich zwischen der Akkumulatorzelle 130 und der Gehäuseaußenwand 252 vorgesehen ist. Die Akkumulatorzellen 190, 192, 194 können ähnliche wulstartige Erweiterungen aufweisen, wie in Fig. 2 gezeigt. Im Kontext der vorliegenden Erfindung bezeichnet der Begriff "wulstartige Erweiterung" eine voluminöse Ausformung oder Ausbuchtung bzw. Verdickung.

Die wulstartige Erweiterung 230 ist dazu ausgebildet, eine zu starke Abkühlung der Akkumulatorzelle 130 im Betrieb des Akkumulators 200 zu verhindern. Somit bleibt die Akkumulatorzelle 130 wärmer, sodass eine homogenere Temperaturverteilung im Akkumulator 200 erzielt werden kann. Die im Gehäuseinneren angeordneten Akkumulatorzellen 110, 170 altern dementsprechend nicht unverhältnismäßig schnell im Vergleich zu den äußeren Akkumulatorzellen 130, 190, 192, 194 und die Lebensdauer der einzelnen Akkumulatorzellen 110, 120, 130, 140, 160, 170, 180, 190, 192, 194 ist aneinander angepasst.

Hierbei kann, wie in Fig. 2 gezeigt, die Ummantelung der im Gehäuseinneren angeordneten Akkumulatorzellen 110, 170, z.B. die Ummantelung 212, im Bereich zwischen der zugeordneten Akkumulatorzelle 110 und der Gehäuseaußenwand 252 eine geringere Wandstärke aufweisen, als die wulstartigen Erweiterungen, z.B. die Erweiterung 230. Die von den Zellen 110, 170 erzeugte Wärme kann dementsprechend besser und schneller an die Umgebung abgeleitet werden, sodass eine Angleichung der Temperaturen der inneren und äußeren Akkumulatorzellen und somit eine homogenere Temperaturverteilung erzielt werden kann. Die Homogenisierung der Temperaturverteilung kann weiter verbessert werden, wenn die Abstände zwischen den einzelnen Akkumulatorzellen 110, 120, 130, 140, 160, 170, 180, 190, 192, 194 bzw. die Wandstärken von deren Ummantelungen im Bereich zwischen den einzelnen Zellen wie bei Fig. 1 beschrieben ausgebildet werden. Dies hat zur Folge, dass die Lebensdauer des Akkumulators 200 verlängert werden kann.

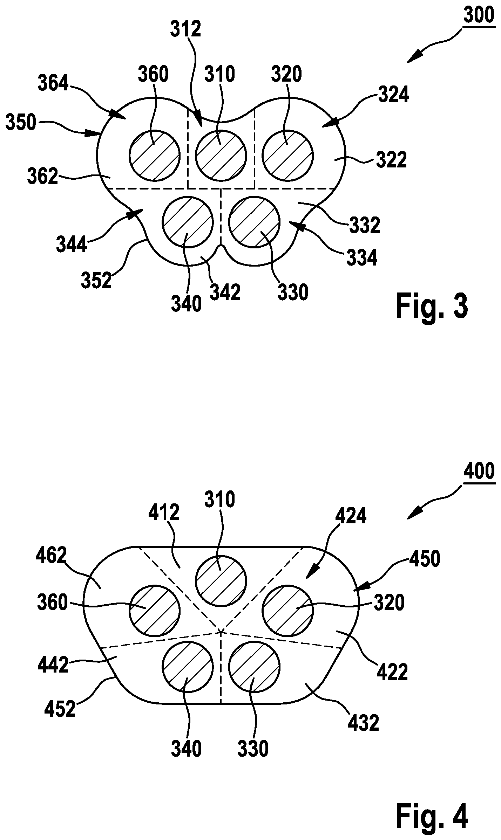

Fig. 3 zeigt einen vorzugsweise zur Stromversorgung einer Elektrowerkzeugmaschine, z.B. der Elektrowerkzeugmaschine 101 von Fig. 1, geeigneten Akkumulator 300 gemäß einer weiteren Ausführungsform, mit separaten Akkumulatorzellen 310, 320, 330, 340, 360, die in einem Akkumulatorgehäuse 350 mit einer Gehäuseaußenwand 352 zu einem Pack oder Modul zusammen geschaltet sind. Diese haben zugeordnete Ummantelungen 312, 322, 332, 342, 362, die ähnlich wie bei Fig. 1 und 2 beschrieben durch ein Füllen des Gehäuses 350 mit Kunststoff hergestellt werden. Die Ummantelungen 322, 332, 342, 362 haben wulstartige Erweiterungen 324, 334, 344, 364.

Da die Akkumulatorzelle 310 mit vier Nachbarzellen die meisten unmittelbar benachbarten Akkumulatorzellen aufweist, und zwar die Zellen 320, 330, 340, 360, kann diese sich im Betrieb des Akkumulators 300 am stärksten erwärmen bzw. aufgeheizt werden. Deshalb hat die Ummantelung 312 zur Gehäuseaußenwand 352 hin nur eine geringe Wandstärke.

Die Akkumulatorzellen 330, 340 haben jeweils drei Nachbarzellen, und zwar die Zellen 310, 320, 340 bzw. 310, 330, 360. Deshalb haben deren Ummantelungen 332, 342 zur Gehäuseaußenwand 352 hin wulstartige Erweiterungen 334, 344 mit einer Wandstärke, die vorzugsweise größer ist als die entsprechende Wandstärke der Ummantelung 312.

Die Akkumulatorzellen 320, 360 haben jeweils nur zwei Nachbarzellen, und zwar die Zellen 310, 330 bzw. 310, 340. Deshalb haben deren Ummantelungen 322, 362 zur Gehäuseaußenwand 352 hin wulstartige Erweiterungen 324, 364 mit einer Wandstärke, die vorzugsweise größer ist als die entsprechende Wandstärke der wulstartigen Erweiterungen 334, 344 und somit die größte Wandstärke im Akkumulator 300.

Fig. 4 zeigt einen vorzugsweise zur Stromversorgung einer Elektrowerkzeugmaschine, z.B. der Elektrowerkzeugmaschine 101 von Fig. 1, geeigneten Akkumulator 400 gemäß einer weiteren, nicht erfindungsgemäßen Ausführungsform, der eine Abwandlung des Akkumulators 300 von Fig. 3 repräsentiert. Bei dem Akkumulator 400 haben die Akkumulatorzellen 310, 320, 330, 340, 360 zugeordnete Ummantelungen 412, 422, 432, 442, 462, die ähnlich wie die Ummantelungen 312, 322, 332, 342, 362 von Fig. 3 ebenso wulstartige Erweiterungen haben können. Z.B. hat die Ummantelung 422 eine wulstartige Erweiterung 424.

Im Vergleich zum Akkumulator 300 ist die Akkumulatorzelle 310 im Akkumulator 400 in Fig. 4 nach oben verschoben, um somit ein Aufheizen der Zelle 310 durch die Akkumulatorzellen 330, 340 im Betrieb des Akkumulators 400 zu reduzieren. Umgekehrt wird auch eine ungewünschte Aufwärmung der Zellen 330, 340 durch die Akkumulatorzelle 310 im Betrieb des Akkumulators 400 verhindert. Somit kann auf einfache Art und Weise eine im Wesentlichen homogene Temperaturverteilung im Akkumulator 400 erreicht werden, sodass eine verlängerte Lebensdauer und eine verbesserte Gebrauchssicherheit erzielt werden können.

## Patentansprüche

1. Akkumulator mit einer Mehrzahl von Akkumulatorzellen (110, 120, 130, 140, 160, 170, 180, 190, 192, 194), die voneinander beabstandet in einem Akkumulatorgehäuse (250) mit einer Gehäuseaußenwand (252) angeordnet sind,
das zumindest teilweise mit einem die Akkumulatorzellen (110, 120, 130, 140, 160, 170, 180, 190, 192, 194) ummantelnden Füllmaterial gefüllt ist,
wobei eine erste Akkumulatorzelle (110) eine erste Ummantelung (212) und eine zweite Akkumulatorzelle (130) eine zweite Ummantelung (232) aufweist, wobei die erste Ummantelung (212) und die zweite Ummantelung (232) zumindest abschnittsweise unterschiedliche Wandstärken aufweisen, wobei die erste Akkumulatorzelle (110) mehr unmittelbar benachbarte Akkumulatorzellen (120, 140, 160, 170, 180) aufweist, als die zweite Akkumulatorzelle (130) und die erste Akkumulatorzelle (110) sowie die zweite Akkumulatorzelle (130) jeweils benachbart zu der Gehäuseaußenwand (252) angeordnet sind, **dadurch gekennzeichnet, dass**
die erste Ummantelung (212) zur Gehäuseaußenwand (252) hin eine geringere Wandstärke aufweist als die zweite Ummantelung (232).

2. Akkumulator nach Anspruch 1, **dadurch gekennzeichnet, dass** die erste Ummantelung (112) im Bereich zwischen der ersten Akkumulatorzelle (110) und zumindest einem Teil ihrer unmittelbar benachbarten Akkumulatorzellen (120, 140, 160, 170, 180) eine größere Wandstärke aufweist, als die zweite Ummantelung (132) im Bereich zwischen der zweiten Akkumulatorzelle (130) und ihren unmittelbar benachbarten Akkumulatorzellen (120, 160, 190).

3. Akkumulator nach Anspruch 2, **dadurch gekennzeichnet, dass** die zweite Ummantelung (232) im Bereich zwischen der zweiten Akkumulatorzelle (130) und der Gehäuseaußenwand (252) eine wulstartige Erweiterung (230) aufweist.

4. Akkumulator nach Anspruch 3, **dadurch gekennzeichnet, dass** die erste Ummantelung (212) im Bereich zwischen der ersten Akkumulatorzelle (110) und der Gehäuseaußenwand (252) eine geringere Wandstärke aufweist, als die wulstartige Erweiterung (230).

5. Akkumulator nach Anspruch 1, wobei die erste Akkumulatorzelle (310) mehr unmittelbar benachbarte Akkumulatorzellen (320, 330, 340, 360) aufweist, als die zweite Akkumulatorzelle (320), **dadurch gekennzeichnet, dass** die zweite Ummantelung (322) im Bereich zwischen der zweiten Akkumulatorzelle (320) und der Gehäuseaußenwand (352) eine wulstartige Erweiterung (324) aufweist, und die erste Ummantelung (312) im Bereich zwischen der ersten Akkumulatorzelle (310) und der Gehäuseaußenwand (352) eine geringere Wandstärke aufweist, als die wulstartige Erweiterung (324).

6. Akkumulator nach einem der vorhergehenden Ansprüche, **dadurch gekennzeichnet, dass** das Füllmaterial Kunststoff ist.

7. Elektrowerkzeugmaschine mit einem Akkumulator (100) gemäß einem der voranstehenden Ansprüche 1 bis 6.

## Claims

1. Accumulator with a plurality of accumulator cells (110, 120, 130, 140, 160, 170, 180, 190, 192, 194) which are arranged spaced apart from one another in an accumulator housing (250) with a housing outer wall (252),
said accumulator housing being at least partially filled with a filling material encasing the accumulator cells (110, 120, 130, 140, 160, 170, 180, 190, 192, 194),
wherein a first accumulator cell (110) has a first casing (212) and a second accumulator cell (130) has a second casing (232), wherein the first casing (212) and the second casing (232) have different wall thicknesses at least in sections, wherein the first accumulator cell (110) has more directly adjacent accumulator cells (120, 140, 160, 170, 180) than the second accumulator cell (130), and the first accumulator cell (110) and the second accumulator cell (130) are each arranged adjacent to the housing outer wall (252), **characterized in that** the first casing (212) has a smaller wall thickness towards the housing outer wall (252) than the second casing (232).

2. Accumulator according to Claim 1, **characterized in that** the first casing (112) has a greater wall thickness in the region between the first accumulator cell (110) and at least some of its directly adjacent accumulator cells (120, 140, 160, 170, 180) than the second casing (132) in the region between the second accumulator cell (130) and its directly adjacent accumulator cells (120, 160, 190).

3. Accumulator according to Claim 2, **characterized in that** the second casing (232) has a bead-like extension (230) in the region between the second accumulator cell (130) and the housing outer wall (252) .

4. Accumulator according to Claim 3, **characterized in that** the first casing (212) has a smaller wall thickness in the region between the first accumulator cell (110) and the housing outer wall (252) than the bead-like extension (230).

5. Accumulator according to Claim 1, wherein the first accumulator cell (310) has more directly adjacent accumulator cells (320, 330, 340, 360) than the second accumulator cell (320), **characterized in that** the second casing (322) has a bead-like extension (324) in the region between the second accumulator cell (320) and the housing outer wall (352), and the first casing (312) has a smaller wall thickness in the region between the first accumulator cell (310) and the housing outer wall (352) than the bead-like extension (324).

6. Accumulator according to one of the preceding claims, **characterized in that** the filling material is plastic.

7. Electric power tool with an accumulator (100) according to one of the preceding Claims 1 to 6.

## Revendications

1. Accumulateur comportant une pluralité de cellules d'accumulateur (110, 120, 130, 140, 160, 170, 180, 190, 192, 194) qui sont placées de manière espacée les unes des autres dans un carter d'accumulateur (250) ayant une paroi extérieure de carter (252),
qui est au moins partiellement rempli d'un matériau de remplissage enveloppant les cellules d'accumulateur (110, 120, 130, 140, 160, 170, 180, 190, 192, 194), dans lequel une première cellule d'accumulateur (110) comporte une première enveloppe (212) et une deuxième cellule d'accumulateur (130) comporte une deuxième enveloppe (232),
dans lequel la première enveloppe (212) et la deuxième enveloppe (232) présentent au moins par sections des épaisseurs de parois différentes,
dans lequel la première cellule d'accumulateur (110) comporte plus de cellules d'accumulateur (120, 140, 160, 170, 180) directement adjacentes que la deuxième cellule d'accumulateur (130) et dans lequel la première cellule d'accumulateur (110) et la deuxième cellule d'accumulateur (130) sont respectivement adjacentes à la paroi extérieure de carter (252), **caractérisé en ce que**
la première enveloppe (212) présente une plus faible épaisseur vers la paroi extérieure de carter (252) que la deuxième enveloppe (232).

2. Accumulateur selon la revendication 1, **caractérisé en ce que** la première enveloppe (112) présente, dans la région située entre la première cellule d'accumulateur (110) et au moins une partie des cellules d'accumulateur (120, 140, 160, 170, 180) qui lui sont directement adjacentes, une épaisseur de paroi supérieure à celle de la deuxième enveloppe (132) dans la région située entre la deuxième cellule d'accumulateur (130) et les cellules d'accumulateur (120, 160, 190) qui lui sont directement adjacentes.

3. Accumulateur selon la revendication 2, **caractérisé en ce que** la deuxième enveloppe (232) présente, dans la région située entre la deuxième cellule d'accumulateur (130) et la paroi extérieure de carter (252), un élargissement (230) en forme de bourrelet.

4. Accumulateur selon la revendication 3, **caractérisé en ce que** la première enveloppe (212) présente, dans la région située entre la première cellule d'accumulateur (110) et la paroi extérieure de carter (252), une plus faible épaisseur de paroi que l'élargissement (230) en forme de bourrelet.

5. Accumulateur selon la revendication 1, dans lequel la première cellule d'accumulateur (310) présente un nombre de cellules d'accumulateur (320, 330, 340, 360) directement adjacentes supérieur à celui de la deuxième cellule d'accumulateur (320), **caractérisé en ce que** la deuxième enveloppe (322) présente, dans la région située entre la deuxième cellule d'accumulateur (320) et la paroi extérieure de carter (352), un élargissement (324) en forme de bourrelet, et **en ce que** la première enveloppe (312) présente, dans la région située entre la première cellule d'accumulateur (310) et la paroi extérieure de carter (352), une épaisseur de paroi plus petite que l'élargissement (324) en forme de bourrelet.

6. Accumulateur selon l'une des revendications précédentes, **caractérisé en ce que** le matériau de remplissage est une matière plastique.

7. Moteur de véhicule électrique comportant un accumulateur (100) selon l'une des revendications 1 à 6.
